# EUROPÄISCHE PATENTSCHRIFT

(11) **EP 3 873 306 B1**
(45) Veröffentlichungstag und Bekanntmachung des Hinweises auf die Patenterteilung: **25.06.2025**
(21) Anmeldenummer: 20701296.4
(22) Anmeldetag: 17.01.2020
(51) Int. Cl.: A47J 31/44, B65D 85/804

(54) **MASCHINE ZUR ZUBEREITUNG VON HEISSGETRÄNKEN**
MACHINE FOR PREPARING HOT BEVERAGES
MACHINE POUR PRÉPARER DES BOISSONS CHAUDES

(30) Priorität: 22.01.2019 DE 102019101535
(43) Veröffentlichungstag der Anmeldung: 08.09.2021
(73) Patentinhaber: Melitta Single Portions GmbH & Co. KG, 32425 Minden (DE)
(72) Erfinder: FERNANDES DE CARVALHO, Kerstin, 33604 Bielefeld (DE); PAHNKE, Jan, 32427 Minden (DE); FELDMANN, Holger, 47877 Willich (DE)
(74) Vertreter: Dantz, Jan Henning
(86) Internationale Anmeldenummer: PCT/EP2020/051140
(87) Internationale Veröffentlichungsnummer: WO 2020/152050

(56) Entgegenhaltungen:
- EP-A1- 2 266 446
- EP-A1- 2 481 330
- EP-A1- 3 184 009
- EP-A2- 3 310 218
- WO-A1-2015/104163
- WO-A1-2018/219883
- US-A1- 2011 308 397

## Beschreibung

Die vorliegende Erfindung betrifft eine Maschine zur Zubereitung von Heißgetränken mit einer Haltevorrichtung, an der ein Halter für eine Portionspackung lösbar eingesetzt ist, einer Verschlussvorrichtung an dem Halter und/oder der Haltevorrichtung, die vor einem Ablauf vorgesehen ist und mittels der der Ablauf verschlossen und geöffnet werden kann, einer Einrichtung zur Erzeugung von heißem Wasser mit einem über der Portionspackung angeordneten Zulauf.

Die DE 10 2014 109 768 B3 offenbart eine Vorrichtung zur Zubereitung von Brühgetränken, bei der an einer Kapsel ein Erkennungssystem vorgesehen ist. Eine Erkennung erfolgt durch eine Lichtquelle, die Licht in den Boden der Kapsel emittiert, das nach einer Lichtumlenkung von dem Boden der Kapsel wieder austritt und dort zur Identifikation an ein Lesegerät erfasst werden kann. Solche Erkennungssysteme für Kapsel haben sich für die Getränkezubereitung bewährt, allerdings werden solche Kapseln teilweise in lose Halter eingefügt, die zur Reinigungszwecken entnehmbar sind, so dass es zu Fehlbetätigungen kommen kann, wenn der Halter nicht korrekt in einer Haltevorrichtung positioniert ist.

Auch die EP 1 786 303 B1 zeigt eine Vorrichtung zur Herstellung von Getränken, bei der eine Erfassungseinrichtung zur Identifizierung einer Kapsel gezeigt ist, die eine Farberkennung vornimmt. Dabei ist die Erfassungseinrichtung an einer Gleitschiene vorgesehen, so dass bei einer Zuführung der Kapsel über die Gleitschiene eine Erkennung zur Steuerung der Vorrichtung vorgenommen werden kann. Die Erkennung einer Kapsel kann allerdings eine Fehlbetätigung nicht verhindern, wenn ein lösbarer Halter an einer Brühkammer vorgesehen ist, der ebenfalls fehlerhaft positioniert werden kann.

In der EP 2 071 986 A1 ist ein Halter zum Einlegen einer Kapsel in eine geschlossene Brühkammer einer Getränkemaschine gezeigt. An einer Wand des Brühkammer befindet sich ein Lesegerät zur Erkennung des Halters. Das heiße Wasser wird durch eine Nadel injiziert, die in die Kapsel eingestochen wird, wenn ein Deckel der Maschine in die Schließposition beweg wird.

EP 3 184 009 offenbart eine Vorrichtung zur Zubereitung eines Getränkes, bei der eine Erkennungseinrichtung für eine Kapsel vorgesehen ist, um die Brühparameter einstellen zu können. Eine ähnliche Vorrichtung offenbart auch US 2011/0308397.

Die EP 2 481 330 B1 offenbart eine Maschine zur Zubereitung von Heißgetränken mit den Merkmalen des Oberbegriffes des Anspruches 1.

In der WO 2018 / 219 883 ist eine Einrichtung zur Detektierung eines Filterhalters einer Kaffeemaschine mit einem Näherungssensor offenbart.

Aus der WO2015/104163 A1 ist ein Siebträger mit einem Ventilmechanismus an dessen Auslass bekannt.

Es ist daher Aufgabe der vorliegenden Erfindung, eine Maschine zur Zubereitung von Heißgetränken zu schaffen, die eine erhöhte Sicherheit gegen Fehlbetätigung aufweist und gut zu reinigen ist.

Diese Aufgabe wird mit einer Maschine zur Zubereitung von Heißgetränken, insbesondere Kaffee, mit den Merkmalen des Anspruches 1 gelöst.

Bei der erfindungsgemäßen Maschine ist ein Halter lösbar an einer Haltevorrichtung eingesetzt, wobei der Halter zur Aufnahme einer Portionspackung dient, beispielsweise einer Portionspackung mit Kaffee oder Tee. Zum Brühen von Kaffee oder Tee kann dann von oben über einen Zulauf heißes Wasser zu der Portionspackung zugeführt werden, um ein Heißgetränk zuzubereiten. Der lösbar in die Haltevorrichtung eingesetzte Halter kann dabei entnommen und bei Bedarf gereinigt werden. Zur Vermeidung einer Fehlbetätigung ist an dem lösbar eingesetzten Halter mindestens eine Markierung vorgesehen, mittels der über die Erkennungseinheit eine korrekte Positionierung des Halters an der Haltevorrichtung erfassbar ist, wobei nur bei einer korrekten Positionierung des Halters über die Steuerung eine Getränkezubereitung durchführbar ist. Sollte der Halter entweder nicht oder fehlerhaft in die Haltevorrichtung eingesetzt worden sein, beispielsweise in einer falschen Drehposition oder durch Verunreinigungen, die zwischen dem Halter und der Haltevorrichtung vorgesehen sind, versetzt angeordnet sein, wird dies durch die Erkennungseinheit erfasst und kann somit eine Wasserzufuhr vermeiden. Dies vermeidet auch ein Überlaufen des Halters, wenn die Verschlussvorrichtung durch fehlerhafte Positionierung des Halters an der Haltevorrichtung verschlossen ist, und das von oben eingeleitete Wasser nicht zu dem Ablauf gelangen kann. Zudem wird die Verbrühungsgefahr durch heißes Wasser für den Benutzer reduziert.

Vorzugsweise ist die Haltevorrichtung stationär angeordnet und mit dem Gehäuse der Maschine verbunden. Die Haltervorrichtung kann beispielsweise als ringförmiges Stützelement ausgebildet sein, in das der Halter von oben lösbar eingesetzt ist. Der Halter kann eine nach oben offene Aufnahme zum Einfügen einer Portionspackung aufweisen.

Vorzugsweise ist die Markierung an einer Oberseite des Halters vorgesehen, insbesondere an einem umlaufenden Rand. Die Markierung kann beispielsweise als Farbelement, Strichcode, Profilierung oder sonstige Markierung ausgebildet sein. Die Erkennungseinheit ist vorzugsweise oberhalb des Halters vorgesehen und kann beispielsweise eine Lichtquelle und ein optisches Lesegerät aufweisen, wobei die Lichtquelle Licht auf den Halter emittiert und über das optische Lesegerät das reflektierte Licht erfasst wird, um eine Erkennung durchzuführen.

In einer erfindungsgemäßen Ausgestaltung ist die Verschlussvorrichtung an dem Halter und der Ablauf an der Haltevorrichtung angeordnet. Die Verschlussvorrichtung kann beispielsweise ein durch eine Feder vorgespanntes Ventil umfassen, das bei korrekter Positionierung des Halters an der Haltevorrichtung durch einen Vorsprung oder einen Anschlag an der Haltevorrichtung in eine geöffnete Position gedrückt wird. Das Ventil wird somit automatisch beim korrekten Einsetzen des Halters von der geschlossenen Position in die geöffnete Position gebracht.

In einer bevorzugten Ausgestaltung umfasst die Maschine eine Anzeige, an der eine Fehlermeldung bei fehlerhafter Positionierung des Halters an der Haltevorrichtung ausgegeben werden kann. Dies erleichtert die Fehlerfindung für den Benutzer.

Wenn an dem Ablauf mindestens zwei voneinander beabstandete Ablauföffnungen vorgesehen sind, kann über die Maschine wahlweise ein Behälter oder zwei Behälter befüllt werden.

In einer weiteren Ausgestaltung können unterschiedliche Halter an der Haltevorrichtung eingesetzt werden, die auch unterschiedliche Markierungen aufweisen. Dadurch kann über die Erkennung des jeweiligen Halters ein Brühprozess gesteuert werden, beispielsweise die Temperatur des heißen Wassers oder die zugeführte Menge an heißem Wasser.

Für eine sichere Fixierung des Halters an der Haltevorrichtung können Rastmittel vorgesehen sein, die ein Verrasten des Halters beim Einsetzen bewirken, was dem Benutzer die korrekte Positionierung auch mechanisch signalisiert.

Die Erfindung wird nachfolgend anhand eines Ausführungsbeispiels mit Bezug auf die beigefügten Zeichnungen näher erläutert. Es zeigen:

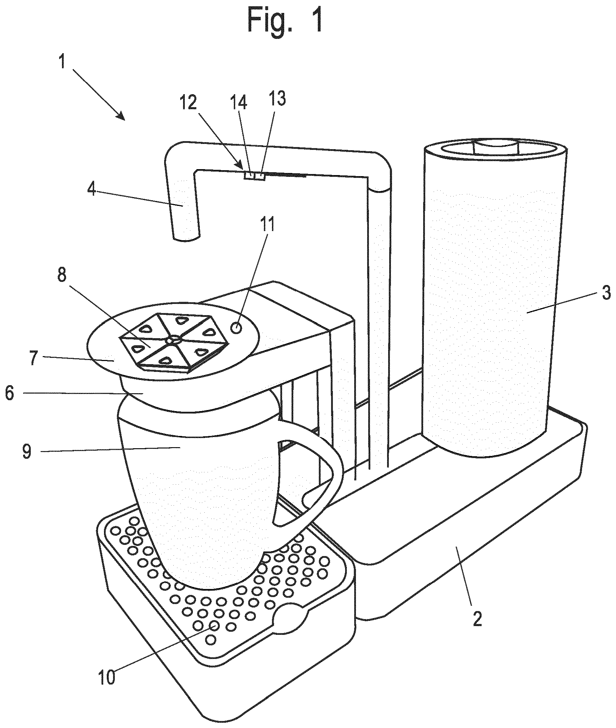

- Figur 1: eine schematische perspektivische Ansicht einer erfindungsgemäßen Maschine zur Zubereitung von Heißgetränken;
- Figuren 2A und 2B: zwei Ansichten der Maschine der Figur 1 im Bereich des Halters in dessen korrekter Positionierung;
- Figuren 3A und 3B: zwei Ansichten ähnlich zu der Figur 2 mit fehlerhaft positioniertem, Halter, und
- Figur 4: eine Ansicht ähnlich Figur 2 mit aus der Haltevorrichtung entnommenem Halter.

Eine Maschine 1 zur Zubereitung von Heißgetränken, insbesondere Kaffee oder Tee, umfasst ein Gehäuse 2, an dem ein Behälter 3 für Frischwasser vorgesehen ist, vorzugsweise in abnehmbarer Ausgestaltung. An oder in dem Gehäuse ist eine Vorrichtung zu Erhitzen und zum Fördern des Wassers aus dem Behälter 3 vorgesehen. Das erhitzte Wasser kann über einen Zulauf 4 gefördert werden, der oberhalb einer Portionspackung 8 angeordnet ist, in der ein Extraktionsmaterial, wie Kaffee oder Tee, angeordnet ist. Der Zulauf 4 besitzt dabei mindestens eine Auslassöffnung beabstandet oberhalb der Portionspackung 8, so dass das heiße Wasser über die Schwerkraft auf die Portionspackung fällt. Die Portionspackung 8 kann beispielsweise so ausgebildet sein, wie dies in der Anmeldung DE 10 2018 101 338 offenbart ist.

Die Portionspackung 8 ist in einen Halter 7 eingesetzt, der wiederum lösbar an einer Haltevorrichtung 6 eingefügt ist. Die Haltevorrichtung 6 ist Teil des Gehäuses der Maschine 1 oder mit dieser verbunden. In dem dargestellten Ausführungsbeispiel umfasst die Haltevorrichtung 6 ein ringförmiges Stützelement, in das der Halter 7 mit der Aufnahme für die Portionspackung 8 lose eingesetzt ist. Statt eines ringförmigen Stützelementes können auch Stützarme oder halbkreisförmige Stützelemente zur Fixierung des Halters 7 vorgesehen werden. Unterhalb der Haltevorrichtung 6 ist eine Tasse 9 zur Befüllung mit dem Heißgetränk auf einer Tropfschale 10 der Maschine 1 angeordnet.

Die Maschine 1 umfasst ferner eine Steuerung, mit der die Förderung des heißen Wassers zu dem Zulauf 4 steuerbar ist. Ferner ist die Steuerung mit einer Erkennungseinheit 12 gekoppelt, die oberhalb des Halters 7 angeordnet ist. Die Erkennungseinheit 12 umfasst eine Lichtquelle 13, beispielsweise eine LED-Leuchte, und benachbart hierzu ein optisches Lesegerät 14 und hat einen definierten Auslese- bzw. Fokusbereich. Auf dem Halter 7 befindet sich eine Markierung 11, die beispielsweise als Farbelement ausgebildet ist. Dadurch kann durch Emittieren von Licht durch die Lichtquelle 13 das reflektierende Licht an dem optischen Lesegerät 14 erfasst werden, so dass eine korrekte Positionierung des Halters 7 an der Haltevorrichtung 6 erfasst werden kann.

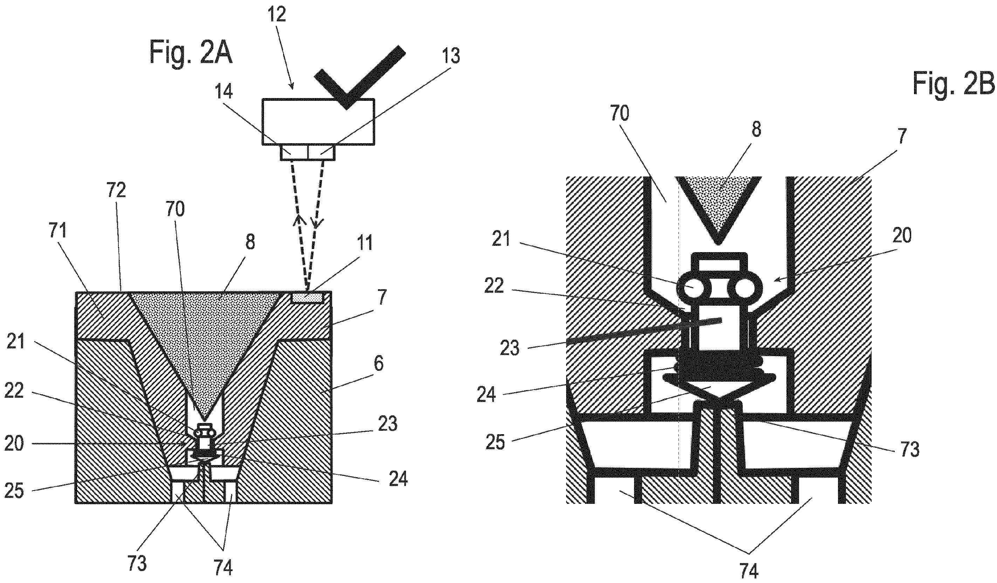

In den Figuren 2A und 2B sind der Halter 7 und die Erkennungseinheit 12 schematisch dargestellt. Befindet sich der Halter 7 in korrekter Position an der Haltevorrichtung 6, ist eine Verschlussvorrichtung 20 in einer geöffneten Position. Die Verschlussvorrichtung 20 umfasst gemäß der vergrößerten Ansicht der Figur 2B einen Ventilkörper 21 in Form eines ringförmigen Dichtelementes, der auf einen Ventilsitz 22 in dem Halter 7 auflegbar ist. Der Ventilkörper 21 ist beabstandet von dem Ventilsitz 22 angeordnet, und somit ist das Ventil in einer geöffneten Position. Der Ventilkörper 21 ist an einem Stift 23 gehalten, der eine Öffnung in dem Halter 7 durchgreift. Auf der unteren Seite der Öffnung ist eine Feder 24 vorgesehen, insbesondere eine Schraubenfeder, die einen im Durchmesser verbreiterten Betätigungsabschnitt 25 an dem Stift 23 nach unten vorspannt. Dadurch ist auch der Ventilkörper 21 durch die Feder 24 nach unten vorgespannt, also in die geschlossene Position. Wenn der Halter 7 korrekt in der Haltevorrichtung 6 positioniert ist, drückt allerdings ein Vorsprung 73 oder Anschlag an der Haltevorrichtung 6 gegen den Betätigungsabschnitt 25, so dass der Stift 23 und damit der Ventilkörper 21 nach oben angehoben wird. Zudem ist erkennbar, dass an der Haltevorrichtung 6 zwei voneinander beabstandete Ablauföffnungen 74 vorgesehen sind, durch die das zubereitete Heißgetränk ausgegeben werden kann.

In Figur 2A ist die im Querschnitt nach unten spitz zulaufende Portionspackung 8 dargestellt, in die von oben heißes Wasser eingefüllt werden kann, das dann durch die Portionspackung 8 strömt, um Kaffee oder Tee zuzubereiten. An der Oberseite schließt die Portionspackung 8 im Wesentlichen bündig mit einer Oberfläche 72 des Halters 7 ab. Der Halter 7 umfasst einen nach außen hervorstehenden umlaufenden Rand 71, der auf einem oberen Rand der Haltevorrichtung 6 aufliegt. An dem oberen Rand 71 ist an einer Oberseite eine Markierung 11 vorgesehen, die zur Erfassung durch die Erkennungseinheit 12 dient. Die Markierung 11 kann als Farbpunkt, bedruckte Farbfläche, als Profilierung oder als farbiges Einsatzelement ausgebildet sein.

Zur Erkennung der korrekten Positionierung wird von der Lichtquelle 13 Licht nach unten abgegeben, wie dies durch die gestrichelte Linie dargestellt ist. Das Lesegerät 14 ist so positioniert, dass an der Stelle der Markierung 11 reflektiertes Licht erfasst wird, so dass nur bei entsprechender Positionierung der Markierung 11 das Licht in der gewünschten Farbe reflektiert wird und über das Lesegerät 14 erfasst werden kann. Das Lesegerät 14 kann beispielsweise als Kamera ausgebildet sein. Dadurch kann die Steuerung der Maschine 1 abhängig von der Erkennungseinheit 12 gesteuert werden, wobei eine Zuführung von heißem Wasser nur dann zugelassen wird, wenn der Halter 7 korrekt an der Haltevorrichtung 6 positioniert ist.

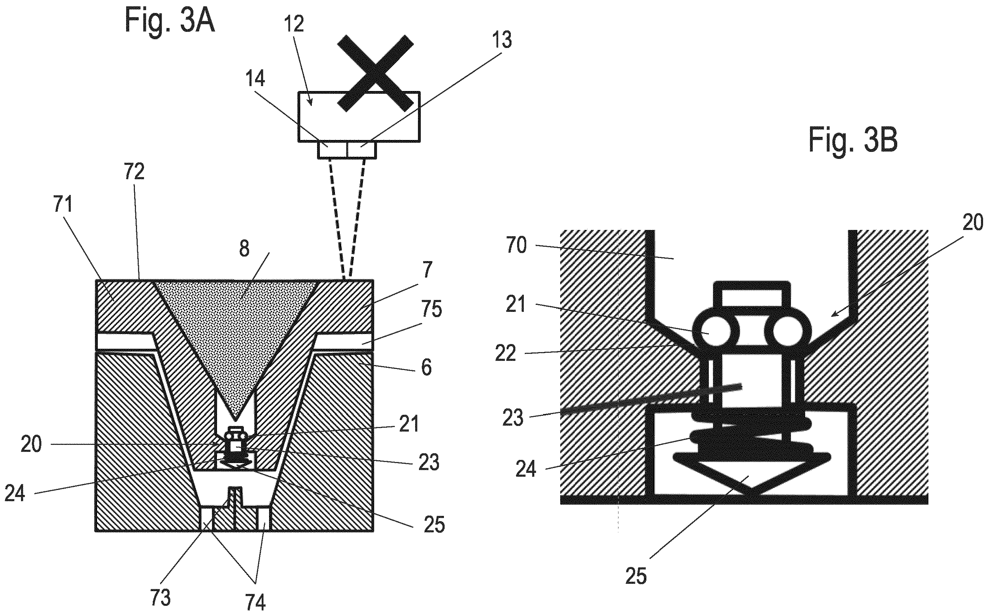

In Figur 3A ist der Halter 7 in einer fehlerhaften Position an der Haltevorrichtung 6 positioniert, beispielsweise weil der Halter 7 um einen Winkel gedreht an der Haltevorrichtung 6 montiert wurde oder sich eine Verunreinigung zwischen dem Halter 7 und der Haltevorrichtung 6 befindet. Ein Vorsprung 75 ist dadurch an einer falschen Position auf der Haltevorrichtung 6 angeordnet, so dass der Halter 7 zu hoch auf der Haltevorrichtung 6 positioniert ist. Durch die fehlerhafte Position des Halters 7 ist die Verschlussvorrichtung 20 in einer verschlossenen Position, wie dies in Figur 3B gezeigt ist. Die Feder 24 drückt den Betätigungsabschnitt 25 nach unten und somit den Ventilkörper 21 gegen den Ventilsitz 22, was die Verschlussvorrichtung 20 verschließt. In dieser Position könnte die Zuführung von heißem Wasser in den Halter 7 zu einem Überlaufen führen, obwohl die Portionspackung 8 in dem Halter 7 korrekt positioniert ist. Um dies zu vermeiden, erkennt die Erkennungseinheit 12 die fehlerhafte Positionierung des Halters 7, da das von der Lichtquelle 13 ausgestrahlte Licht zwar reflektiert wird, aber nicht durch die Markierung 11 reflektiert wird, sondern durch eine andere Position an dem Halter 7, was zu einer Fehlermeldung führt. Dadurch verhindert die Steuerung des Ausgeben von heißem Wasser an dem Zulauf 4. Die in Figur 3A dargestellte Position kann auch als Parkposition für den Halter 7 genutzt werden, durch die geschlossene Verschlussvorrichtung kann ein Tropfen nach unten trotz eventuellem Restwasser in der Portionspackung 8 vermieden werden.

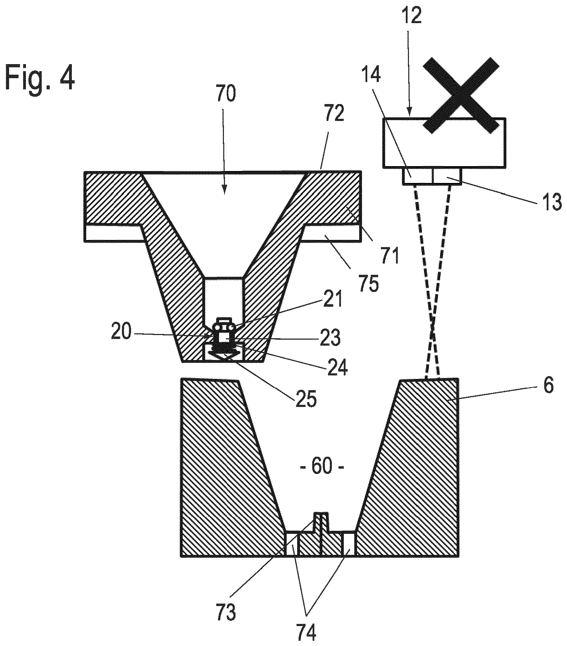

In Figur 4 ist eine weitere fehlerhafte Positionierung des Halters 7 an der Haltevorrichtung 6 gezeigt, da der Halter 7 vollständig von der Haltevorrichtung 6 entnommen wurde. Auch in dieser Position erkennt die Erkennungseinheit 12, dass der Halter 7 nicht in der Haltevorrichtung 6 angeordnet ist, da das Licht von der Lichtquelle 13 nicht über die Markierung 11 zu dem optischen Lesegerät 14 reflektiert wird. Zur Vermeidung eines Verletzungsrisikos kann bei entnommenen Halter 7 die Ausgabe von heißem Wasser an dem Zulauf 4 durch die Steuerung verhindert werden.

Die Verschlussvorrichtung 20 an dem Halter 7 befindet sich durch die Entnahme in der geschlossenen Position, da der Vorsprung 73 der Haltevorrichtung 6 den Ventilkörper 21 nicht von dem Ventilsitz 22 abhebt. Dies ermöglicht einen tropffreien Transport einer bereits zubereiteten Portionspackung zum Beispiel in den Bioabfalleimer.

In einer alternativen Ausführungsform umfasst die Maschine 1 unterschiedliche Halter 7, beispielsweise mit einer unterschiedlichen Größe der Aufnahme für unterschiedlich große Portionspackungen 8. Dann kann über die Erkennungseinheit 12 detektiert werden, welcher Halter 7 sich in der Haltevorrichtung 6 befindet und welche Menge an heißem Wasser und gegebenenfalls in welcher Temperatur das heiße Wasser zugeführt werden soll. Jeder Halter 7 weist dann eine unterschiedliche Markierung 11 auf, beispielsweise in unterschiedlichen Farben.

In dem dargestellten Ausführungsbeispiel ist die Verschlussvorrichtung 20 an dem Halter 7 vorgesehen. Es ist auch möglich, zusätzlich oder alternativ eine Verschlussvorrichtung an der Haltevorrichtung 6 vor dem Ablauf vorzugsehen.

### Bezugszeichenliste

- 1: Maschine
- 2: Gehäuse
- 3: Behälter
- 4: Zulauf
- 6: Haltevorrichtung
- 7: Halter
- 8: Portionspackung
- 9: Tasse
- 10: Tropfschale
- 11: Markierung
- 12: Erkennungseinheit
- 13: Lichtquelle
- 14: Lesegerät
- 20: Verschlussvorrichtung
- 21: Ventilkörper
- 22: Ventilsitz
- 23: Stift
- 24: Feder
- 25: Betätigungsabschnitt
- 71: Rand
- 72: Oberfläche
- 73: Vorsprung
- 74: Ablauföffnung
- 75: Vorsprung

## Patentansprüche

1. Maschine (1) zur Zubereitung von Heißgetränken, umfassend:
- eine Haltevorrichtung (6), an der ein Halter (7) für eine Portionspackung (8) lösbar eingesetzt ist;
- eine Verschlussvorrichtung (20) an dem Halter (7) und/oder der Haltevorrichtung (6), die vor einem Ablauf (24) vorgesehen ist und mittels der der Ablauf (24) verschlossen und geöffnet werden kann; und
- eine Einrichtung zur Erzeugung von heißem Wasser mit einem über der Portionspackung (8) angeordneten Zulauf (4),
**dadurch gekennzeichnet, dass** die Maschine (1) eine Steuerung mit einer Erkennungseinheit (12) umfasst, und an dem lösbar eingesetzten Halter (7) mindestens eine Markierung (11) vorgesehen ist, mittels der über die Erkennungseinheit (12) eine korrekte Positionierung des Halters (7) an der Haltevorrichtung (6) erfassbar ist, und nur bei einer korrekten Positionierung über die Steuerung eine Getränkezubereitung durchführbar ist, wobei die Verschlussvorrichtung (20) an dem Halter (7) und der Ablauf (24) an der Haltevorrichtung (6) angeordnet ist.

2. Maschine nach Anspruch 1, **dadurch gekennzeichnet, dass** die Haltevorrichtung (6) ein mit einem Gehäuse der Maschine (1) verbundenes ringförmiges Stützelement für den Halter (7) aufweist.

3. Maschine nach Anspruch 1 oder 2, **dadurch gekennzeichnet, dass** die Markierung (11) an einer Oberseite des Halters (7) vorgesehen ist.

4. Maschine nach einem der vorhergehenden Ansprüche, **dadurch gekennzeichnet, dass** die Verschlussvorrichtung (20) ein durch eine Feder (24) vorgespanntes Ventil umfasst, das bei korrekter Positionierung des Halters (7) an der Haltevorrichtung (6) durch einen Vorsprung (73) an der Haltevorrichtung (6) in eine geöffnete Position gedrückt ist.

5. Maschine nach einem der vorhergehenden Ansprüche, **dadurch gekennzeichnet, dass** die Erkennungseinheit (12) eine Lichtquelle (13) und ein optisches Lesegerät (14) aufweist.

6. Maschine nach einem der vorhergehenden Ansprüche, **dadurch gekennzeichnet, dass** die Markierung (11) als Farbelement ausgebildet ist.

7. Maschine nach einem der vorhergehenden Ansprüche, **dadurch gekennzeichnet, dass** eine Anzeige vorgesehen ist, an der eine Fehlermeldung bei fehlerhafter Positionierung des Halters (7) an der Haltevorrichtung (6) ausgebbar ist.

8. Maschine nach einem der vorhergehenden Ansprüche, **dadurch gekennzeichnet, dass** der Ablauf (24) mindestens zwei voneinander beabstandete Ablauföffnungen aufweist.

9. Maschine nach einem der vorhergehenden Ansprüche, **dadurch gekennzeichnet, dass** unterschiedliche Halter (7) an der Haltevorrichtung (6) einsetzbar sind, die unterschiedliche Markierungen (11) aufweisen.

10. Maschine nach einem der vorhergehenden Ansprüche, **dadurch gekennzeichnet, dass** der Halter (7) an der Haltevorrichtung (6) über Rastmittel festlegbar ist.

## Claims

1. Machine (1) for preparing hot beverages, comprising:
- a holding device (6) on which a holder (7) for a portioned package (8) is detachably inserted;
- a closure device (20) on the holder (7) and/or the holding device (6), which is provided in front of an outlet (24) and by means of which the outlet (24) can be closed and opened;
- a device for producing hot water having an inlet (4) arranged above the portioned package (8), and
- **characterized in that**
the machine comprises a control system having a detection unit (12), and at least one marking (11) is provided on the detachably inserted holder (7), by means of which marking (11) a correct positioning of the holder (7) on the holding device (6) can be detected via the detection unit (12), and a beverage preparation can be carried out via the control system only if the positioning is correct, wherein the closure device (20) is arranged on the holder (7) and the outlet (24) is arranged on the holding device (6).

2. Machine according to claim 1, **characterized in that** the holding device (6) comprises an annular support element for the holder (7) connected to a housing of the machine (1).

3. Machine according to claim 1 or 2, **characterized in that** the marking (11) is provided on an upper side of the holder (7).

4. Machine according to one of the preceding claims, **characterized in that** the closure device (20) comprises a valve pretensioned by a spring (24) which, when the holder (7) is correctly positioned on the holding device (6), is pressed into an open position by a projection (73) on the holding device (6).

5. Machine according to one of the preceding claims, **characterized in that** the detection unit (12) comprises a light source (13) and an optical reader (14).

6. Machine according to one of the preceding claims, **characterized in that** the marking (11) is formed as a color element.

7. Machine according to one of the preceding claims, **characterized in that** a display is provided on which an error message can be output in the event of incorrect positioning of the holder (7) on the holding device (6).

8. Machine according to one of the preceding claims, **characterized in that** the outlet (24) comprises at least two outlet openings spaced apart from each other.

9. Machine according to one of the preceding claims, **characterized in that** different holders (7) are insertable on the holding device (6) and have different markings (11).

10. Machine according to one of the preceding claims, **characterized in that** the holder (7) can be fixed to the holding device (6) by means of latching means.

## Revendications

1. Machine (1) pour la préparation de boissons chaudes, comprenant :
- un dispositif de maintien (6) sur lequel une monture (7) pour un conditionnement de portion (8) est insérée de façon amovible ;
- un dispositif de fermeture (20) sur la monture (7) et/ou le dispositif de maintien (6), qui est prévu avant un écoulement (24) et au moyen duquel l'écoulement (24) peut être fermé et ouvert, et
- une installation pour la production d'eau chaude avec une arrivée (4) disposée au-dessus du conditionnement de portion (8),
**caractérisée en ce que** la machine (1) comprend une commande avec une unité de reconnaissance (12) et au moins un marquage (11) est prévu sur la monture (7) insérée de façon amovible, au moyen duquel l'unité de reconnaissance (12) peut détecter un positionnement correct de la monture (7) sur le dispositif de maintien (6), et la commande n'autorise la préparation d'une boisson que si le positionnement est correct, le dispositif de fermeture (20) étant disposé sur la monture (7) et l'écoulement (24) sur le dispositif de maintien (6).

2. Machine selon la revendication 1, **caractérisée en ce que** le dispositif de maintien (6) comporte un élément d'appui annulaire relié au corps de la machine (1) pour la monture (7).

3. Machine selon la revendication 1 ou 2, **caractérisée en ce que** le marquage (11) est prévu sur une face supérieure de la monture (7).

4. Machine selon l'une des revendications précédentes, **caractérisée en ce que** le dispositif de fermeture (20) comprend une soupape précontrainte par un ressort (24), qui est pressée dans une position ouverte par une saillie (73) sur le dispositif de maintien (6) quand la monture (7) est positionnée correctement sur le dispositif de maintien (6).

5. Machine selon l'une des revendications précédentes, **caractérisée en ce que** l'unité de reconnaissance (12) comporte une source lumineuse (13) et un lecteur optique (14).

6. Machine selon l'une des revendications précédentes, **caractérisée en ce que** le marquage (11) est conformé comme un élément coloré.

7. Machine selon l'une des revendications précédentes, **caractérisée en ce qu'**il est prévu un indicateur avec lequel un message d'erreur peut être émis en cas de positionnement incorrect de la monture (7) sur le dispositif de maintien (6).

8. Machine selon l'une des revendications précédentes, **caractérisée en ce que** l'écoulement (24) comporte au moins deux ouvertures d'écoulement écartées l'une de l'autre.

9. Machine selon l'une des revendications précédentes, **caractérisée en ce que** différentes montures (7) présentant des marquages (11) différents peuvent être insérées sur le dispositif de maintien (6).

10. Machine selon l'une des revendications précédentes, **caractérisée en ce que** la monture (7) peut être fixée sur le dispositif de maintien (6) à l'aide de moyens d'enclenchement.
